# EUROPEAN PATENT APPLICATION

(11) **EP 3 954 733 A1**
(43) Date of publication of application: **16.02.2022**
(21) Application number: 20788511.2
(22) Date of filing: 07.04.2020
(51) Int. Cl.: C08K 5/5313, C08L 67/02, C08G 63/688, D01F 6/62, D01F 1/07, D01D 5/08

(54) **POLYESTER RESIN FOR FLAME RETARDANT FIBER, FLAME RETARDANT FIBER HAVING EXCELLENT DYEABILITY, AND PREPARATION METHOD THEREFOR**

(30) Priority: 08.04.2019 KR 20190040783
(71) Applicant: Toray Advanced Materials Korea Inc., Gumi-si, Gyeongsangbuk-do 39389 (KR)
(72) Inventor: LIM, Seong Su, Gumi-si, Gyeongsangbuk-do 39389 (KR); JEONG, Geung Sik, Gumi-si, Gyeongsangbuk-do 39389 (KR)
(74) Representative: Dehns
(86) International application number: PCT/KR2020/004644
(87) International publication number: WO 2020/209563

(57) **Abstract**

The present invention relates to a polyester resin used for manufacturing a flame retardant fiber, and more specifically to a polyester resin which can be used for manufacturing a flame retardant fiber having not only flame retardancy but also excellent dyeability, with the introduction of a specific flame retardant material into a polyester compound polymerized to have the optimal composition and composition ratio.

## Description

### CROSS-REFERENCE TO RELATED APPLICATION

This application claims priority to and the benefit of Korean Patent Application No. 10-2019-0040783, filed on April 8, 2019, the disclosure of which is incorporated herein by reference in its entirety.

### [Technical Field]

The present invention relates to a polyester resin used for manufacturing a flame retardant fiber, a flame retardant fiber with excellent dyeability manufactured using the same and a manufacturing method thereof.

### [Background Art]

Generally, curtains, wallpaper, carpets, flame retardant non-woven fabrics and other ornaments are made of flame retardant fabrics and non-woven fabrics for safety in places where people are concentrated, places with a lot of electrical facilities, places with many closed spaces and the like. Therefore, for the conventional flame retardant yarn, chemical fiber yarn was produced by melting and stretching chemical fiber materials, and then the surface of each chemical fiber yarn was treated with a flame retardant material to prevent burning due to flames and the like. In addition, as a conventional flame retardant treatment method, the chemical fiber yarn is woven or knitted using a loom or knitting machine to produce a fabric, and then the surface of the fabric is treated with a flame retardant material to prevent ignition by fire. However, conventionally, since the flame retardant treatment is performed after the synthetic fiber or fabric is manufactured, the flame retardant material is attached to the surface of the chemical fiber or the surface of the fabric, and the flame retardant material may be easily detached depending on the time it is used, and there was a disadvantage that the flame retardant ability is deteriorated by the detachment of the flame retardant material.

Accordingly, techniques for manufacturing flame retardant yarn by mixing flame retardant components when manufacturing flame retardant yarn are being researched and developed. However, in the polyester polymer composition having flame retardancy, the flame retardant material must be evenly dispersed and distributed in the polyester resin, but the flame retardant material having limited fluidity is not easily dispersed evenly inside the polyester resin such that a desired flame retardant function cannot be obtained.

In addition, in the case of flame retardant fibers, there is a tendency that these are used in high-quality textile products, and in the case of products using high-quality textiles, high deep color is required, and in order to manufacture such products, complementary colorants, dyes, pigments and the like are added to manufacture a resin and/or a fiber.

However, in the case of existing flame retardant fibers and/or resins for manufacturing the same, there is a problem in that the physical properties of flame retardant fibers and/or fabrics manufactured by an additive composition or process for enhancing color clarity are reduced. For example, Korean Registered Patent Laid-Open No. 2005-0103617 mentions a flame retardant polyester that provides excellent color expression during the dyeing process by adding a complementary colorant, but there is a problem in that hydrolysis of the flame retardant material occurs by hot water at high temperature during the dyeing process. In addition, Korean Registered Patent Laid-Open No. 2003-0028022 describes a method of manufacturing polyester using a cationic dye, which requires pretreatment of metal sulfonate salts to maintain spinnability when preparing a polyester polymer composition that can be dyed with a cationic dye, and as a result, the process cost increases. In addition, when the content of a modifier is increased to improve color clarity, there is a problem that causes a decrease in the physical properties of yarn and an increase in pack pressure during the process.

In addition, when manufacturing flame retardant fibers (or flame retardant yarns) using existing reactive-type flame retardants, in order to simultaneously satisfy dyeability and flame retardancy, a different type of modifier is added together during the polymerization process to proceed with the reaction. In this case, if the content of the modifier increases, for example, when reinforcement of flame retardancy is induced through an increase in the input amount of the flame retardant material or improvement of dyeability is induced through an increase in the input amount of metal salt, the deterioration of polymerization reactivity occurs due to the content of the modifier at a high concentration, and as a result, it could cause the deterioration of spinning mobility and the deterioration of the physical properties of the fibers.

### [Disclosure]

### [Technical Problem]

The present invention has been devised to solve the above problems, and is directed to providing a polyester resin manufactured using an additive-type flame retardant component, as a resin for manufacturing polyester fibers that can improve the dyability of polyester fibers and improve physical properties and flame retardancy, a flame retardant fiber using the same and a manufacturing method thereof.

### [Technical Solution]

In order to solve the above problem, the polyester resin for a flame retardant fiber of the present invention includes a polyester compound and a phosphorus compound including a repeating unit represented by Chemical Formula 2 below, wherein the polyester compound includes a polymer in which an oligomer obtained by esterification of phthalic acid and an aliphatic diol having 2 to 10 carbon atoms; and metal sulfonate represented by Chemical Formula 1 below are polymerized; 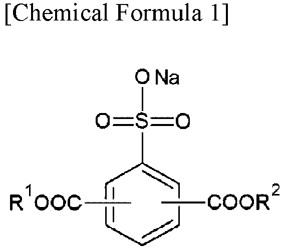 wherein, in Chemical Formula 1 above, R¹ and R² are independently an alkyl group having 1 to 10 carbon atoms, an alkylene group having 2 to 5 carbon atoms, a cycloalkyl group having 5 to 6 carbon atoms, a phenyl group, -CH₂COOH, - CH₂CH₂COOH or -CH₂CH₂CH₂COOH, and 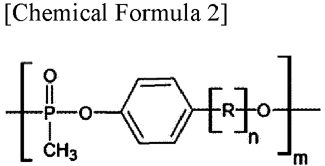 wherein, in Chemical Formula 2 above, R is an alkylene group having 1 to 5 carbon atoms, n is an integer of 1 to 20, and m is an integer of 1 to 80.

In a preferred exemplary embodiment of the present invention, the phthalic acid may include at least one selected from terephthalic acid and isophthalic acid.

In a preferred exemplary embodiment of the present invention, the aliphatic diol may include at least one selected from ethylene glycol, diethylene glycol, propylene glycol, butylene glycol, trimethyl glycol, tetramethylene glycol, pentamethyl glycol, hexamethylene glycol, heptamethylene glycol, octamethylene glycol, nonamethylene glycol, decamethylene glycol, undecamethylene glycol, dodecamethylene glycol and tridecamethylene glycol

In a preferred exemplary embodiment of the present invention, the oligomer may be obtained by polymerizing phthalic acid and the aliphatic diol at a molar ratio of 1:1.3 to 1.8.

In a preferred exemplary embodiment of the present invention, the polyester compound may include a polymer obtained by polymerizing 97.5 to 99 mol% of the oligomer and 1.0 to 2.5 mol% of the phosphorus compound.

In a preferred exemplary embodiment of the present invention, the phosphorus (P) content in the polyester resin for a flame retardant fiber of the present invention may be 5,000 to 7,000 ppm.

In a preferred exemplary embodiment of the present invention, the polyester resin for a flame retardant fiber of the present invention may have a melting temperature of 210 to 240°C and an intrinsic viscosity (IV) of 0.500 to 0.750 dL/g.

Another object of the present invention relates to a flame retardant fiber which is excellent in deep color, including the polyester polymer composition described above, and the melting temperature during spinning may be 270°C to 290°C.

In a preferred exemplary embodiment of the present invention, the flame retardant fiber of the present invention may have a K/S value of 13 to 19, when the color yield is measured by using a colorimeter based on the CIE 1976 standard.

In a preferred exemplary embodiment of the present invention, the flame retardant fiber of the present invention may have an after-flame time of less than 1 second, when measured according to the measurement method of flame retardancy (KS K 0585: 2008).

In a preferred exemplary embodiment of the present invention, when the mono-fineness of the fiber is 1.2 de to 2.2 de, the strength may be 3.4 g/de to 4.5 g/de, and the elongation may be 25% to 40%.

In a preferred exemplary embodiment of the present invention, when measured according to KS-M ISO No. 4589-2, the limiting oxygen index (LOI) may be 30% to 40%.

Still another object of the present invention relates to a method for manufacturing a flame retardant fiber described above, and the flame retardant fiber may be manufactured by performing a process including a first step of preparing an oligomer by performing an esterification reaction with phthalic acid comprising at least one selected from terephthalic acid and isophthalic acid and an aliphatic diol having 2 to 10 carbon atoms; a second step of preparing a polyester compound by polymerizing the oligomer and metal sulfonate represented by Chemical Formula 1 below; and a third step of melting and spinning the polyester compound.

In a preferred exemplary embodiment of the present invention, the esterification reaction of the first step may be performed at 230°C to 250°C, while dehydrating water generated during the reaction.

In a preferred exemplary embodiment of the present invention, the polymerization reaction of the second step may be performed under conditions of 270°C to 290°C and 1.5 torr or less.

In a preferred exemplary embodiment of the present invention, the polyester compound of the third step may be dried at 110°C to 130°C for 3 to 5 hours, and then melting and spinning may be performed.

In a preferred exemplary embodiment of the present invention, after a phosphorus compound including a repeating unit represented by Chemical Formula 2 below is mixed with the polyester compound by chip mixing or melt polymer mixing, the melting of the third step may be performed by melting the compound.

In a preferred exemplary embodiment of the present invention, the spinning of the third step may be performed at a spinning temperature of 270°C to 300°C and a spinning speed of 1,500 to 5,000 mpm.

Another object of the present invention is to provide a flame retardant yarn and/or a flame retardant fabric including the flame retardant fiber.

### [Advantageous Effects]

In the flame retardant fiber manufactured using the polyester resin of the present invention and the manufacturing method thereof, by manufacturing the resin and fiber by adding a flame retardant material during the spinning process, not only can the polymerization reactivity of the polyester resin be improved, but also a high concentration of the flame retardant can be additionally introduced after the polymerization process such that the content of the flame retardant can be freely adjusted, and it has excellent spinning mobility because it is possible to impart the optimum viscosity of the polymer. In addition, due to the polymer-type flame retardant, there are effects of preventing the detachment of the flame retardant material and the deterioration of quality due to hydrolysis during the dyeing process, and thus, the flame retardant fiber of the present invention is capable of securing excellent dyeability, strength, elongation and flame retardancy at the same time.

### [Modes of the Invention]

Hereinafter, preferred exemplary embodiments according to the present invention will be described in more detail with reference to the accompanying drawings in order to describe the present invention more specifically. However, the present invention is not limited to the exemplary embodiments described herein and may be embodied in other forms. Like reference numerals refer to like constitutional elements throughout the entire specification.

The polyester resin for a flame retardant fiber of the present invention is a material that can prevent the deterioration of the physical properties of fibers due to hydrolysis of flame retardant materials, when processing into flame retardant fibers (and/or flame retardant yarns) and the like, and it includes a polyester compound and a phosphorus compound including a repeating unit represented by Chemical Formula 2 below.

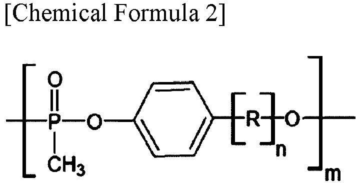

In Chemical Formula 2, R is an alkylene group having 1 to 5 carbon atoms, and preferably, an alkylene group having 2 to 4 carbon atoms. In addition, n is an integer of 1 to 20, and preferably, an integer of 5 to 10. In addition, m is an integer of 1 to 80, and preferably, an integer of 20 to 40.

The polyester compound includes a polymer in which an oligomer obtained by esterification of phthalic acid and an aliphatic diol; and metal sulfonate represented by Chemical Formula 1 below are polymerized, preferably includes a polymer obtained by polymerizing 97.5 to 99.0 mol% of the oligomer and 1.0 to 2.5 mol% of the metal sulfonate, more preferably includes a polymer obtained by polymerizing 98 to 99 mol% of the oligomer and 1 to 2 mol% of the metal sulfonate, and much more preferably includes a polymer obtained by polymerizing 98.2 to 99.0 mol% of the oligomer and 1.0 to 1.8 mol% of the metal sulfonate. In this case, if the metal sulfonate content is less than 1 mol%, since the dyeing ability is not good, there is a problem in that the dyeability is not good because it is not possible to secure an appropriate color yield of the flame retardant fiber, and if it is more than 2.5 mol%, there are problems in that the fiber manufactured by the polyester resin of the present invention does not secure sufficient strength, the limiting oxygen index of the polyester resin is lowered, and the spinnability is lowered, and thus, it is preferable to polymerize within the above range.

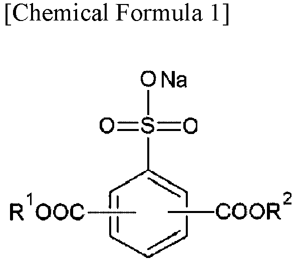

In Chemical Formula 1 above, R¹ and R² are independently an alkyl group having 1 to 10 carbon atoms, an alkylene group having 2 to 5 carbon atoms, a cycloalkyl group having 5 to 6 carbon atoms, a phenyl group, -CH₂COOH, - CH₂CH₂COOH or -CH₂CH₂CH₂COOH, and preferably, an alkyl group having 1 to 5 carbon atoms, an alkylene group having 2 to 3 carbon atoms, -CH₂COOH, - CH₂CH₂COOH or -CH₂CH₂CH₂COOH, and more preferably, an alkyl group having 1 to 3 carbon atoms or -CH₂COOH.

In addition, among the oligomer components, the phthalic acid may include at least one selected from terephthalic acid and isophthalic acid, and preferably, terephthalic acid.

In addition, the aliphatic diol may include an aliphatic diol having 2 to 10 carbon atoms, preferably include at least one selected from ethylene glycol, diethylene glycol, propylene glycol, butylene glycol, trimethyl glycol, tetramethylene glycol, pentamethyl glycol, hexamethylene glycol, heptamethylene glycol, octamethylene glycol, nonamethylene glycol, decamethylene glycol, undecamethylene glycol, dodecamethylene glycol and tridecamethylene glycol, and more preferably include at least one or two selected from ethylene glycol, diethylene glycol, propylene glycol and butylene glycol.

In addition, the oligomer may be prepared by esterification using phthalic acid and an aliphatic diol at a molar ratio of 1: 1.20 to 1.50, preferably, at a molar ratio of 1: 1.25 to 1.40, and more preferably, at a molar ratio of 1: 1.25 to 1.35. In this case, if the molar ratio of the aliphatic diol is less than 1.2, the yield of the polyester resin may be low, and if the aliphatic diol is used in excess of 1.5 molar ratio, there is a problem in that the cost of treating the same increases due to unreacted aliphatic diol, which is uneconomical.

In addition, the polyester resin for a flame retardant fiber of the present invention may include a phosphorus (P) content in the resin of 5,000 to 7,000 ppm (based on the P content of the phosphorus compound represented by Chemical Formula 2 above), preferably, 5,500 to 6,800 ppm, and preferably, 5,700 to 6,500 ppm. In this case, if it is less than 5,000 ppm (based on the P content of the compound), the flame retardant fiber may not secure sufficient flame retardancy, and if it is more than 7,000 ppm (based on the P content of the compound), an excessive P content may result in cost increase and poor spinning mobility due to a decrease in viscosity. In addition, the deterioration of obj ect properties may occur in the final product, which may have a problem of process passability due to trimming during weaving and circular knitting processes, and thus, it is preferable to use within the above range.

Further, in addition to the phosphorus compound represented by Chemical Formula 2 above, the polyester resin for a flame retardant fiber of the present invention may be prepared by further introducing at least one or two additives selected from a heat stabilizer, an antifoaming agent, an antioxidant, a lubricant, a light stabilizer, a hydrolysis stabilizer, a release agent, a pigment, an antistatic agent, a conductivity imparting agent, an EMI shielding agent, a magnetization agent, a mineral filler, a crosslinking agent, an antibacterial agent, a processing aid, a metal deactivator, a flame retardant, a fluorine-based anti-drip agent, an anti-friction agent, an anti-wear agent, a coupling agent and the like.

Among the additives, the heat stabilizer may be a general heat stabilizer used in the art, and preferably, it may be used by mixing at least one or two selected from trimethyl phosphate, triethyl phosphate, tributyl phosphate, tributoxyethyl phosphate, tricresyl phosphate, triaryl phosphate isopropylated and hydroquinone bis-(diphenyl phosphate).

The polyester resin for a flame retardant fiber of the present invention having the above-described composition and composition ratio may have a melting temperature of 210°C to 240°C, and preferably, 230°C to 235°C.

In addition, the polyester resin for a flame retardant fiber of the present invention may have an intrinsic viscosity (IV) of 0.500 to 0.750 dL/g, preferably, 0.550 to 0.700 dL/g, and more preferably, 0.630 to 0.700 dL/g

The flame retardant fibers with excellent dyeability of the present invention may be manufactured by performing the following process.

It may be manufactured by performing a process including a first step of preparing an oligomer by performing an esterification reaction with phthalic acid including at least one selected from terephthalic acid and isophthalic acid and an aliphatic diol; a second step of preparing a polyester compound; and a third step of melting and spinning the polyester compound.

The type and composition ratio of phthalic acid and an aliphatic diol in the first step are the same as described above. In addition, the esterification reaction is preferably carried out at 230°C to 250°C and preferably, at 235°C to 245°C, and it is preferable in terms of reaction to be carried out while dehydrating water generated during the esterification reaction. In this case, if the esterification reaction temperature is less than 230°C, the yield of the reactants may fall, and if it is more than 250°C, a lot of by-products may be generated, and thus, it is preferable to perform the esterification reaction in the above temperature range.

In addition, it is preferable to carry out the esterification reaction for the oligomer to have a weight average molecular weight of 50 to 120, preferably, a weight average molecular weight of 70 to 100, and more preferably, a weight average molecular weight of 85 to 95.

The second step is a step of preparing a polyester compound by polymerizing the oligomer prepared in the first step with metal sulfonate represented by Chemical Formula 1 above, and the polymerization ratio of the oligomer and the metal sulfonate is as described above.

In addition, the polymerization reaction may be carried out under conditions of 270°C to 290°C and 1.5 torr or less, preferably, 270°C to 280°C and 1.5 torr or less, and more preferably, 275°C to 280°C and 1.5 torr or less. In this case, if the reaction temperature is less than 270°C, there may be a problem in that the unit molecular weight is lowered in the polymerization reaction step or the reaction participation rate of the oligomer is lowered such that the reaction yield is reduced by detaching in a vacuum step. In addition, if it is more than 290°C, thermal decomposition occurs, which may cause a problem of reduced reactivity or browning and carbonization of the polyester compound, and thus, it is preferable to carry out within the above temperature range.

In addition, the second step may further include a process of solid-state polymerization to remove unreacted metal sulfonate and oligomers.

The third step is a process of manufacturing fibers by spinning the polyester compound prepared in the second step, and after melting the polyester compound, it is performed by spinning the melt product. In this case, when the polyester compound is melted, after mixing the phosphorus compound including a repeating unit represented by Chemical Formula 2 above with the polyester compound by chip mixing or melt polymer mixing, it may be carried out by melting the mixture.

In addition, the polyester compound may be obtained by performing a process of drying for 3 to 5 hours at 110° C to 130°C, and preferably, at 110°C to 120°C before melting. In general, drying is performed at 130°C to 150°C, but the present invention uses a polyester compound prepared using a component having the specific composition and composition ratio, and thus, the processing temperature may be lowered.

In addition, the spinning may be performed at a spinning temperature of 270°C to 300°C and a spinning speed of 1,500 mpm to 5,000 mpm, and preferably, spinning may be performed at a spinning temperature of 275°C to 285°C and a spinning speed of 2,500 mpm to 4,500 mpm. In this case, if the spinning temperature is less than 270°C, the alignment of the polymer is insufficient such that there may be a problem of defecting dyeability due to non-stretching, and if it is more than 300°C, there may be a problem in that the physical properties of the yarn are deteriorated due to the occurrence of thermal decomposition by high temperature. In addition, if the spinning speed is less than 1,500 mpm, there may be a problem in that the alignment of the polymer is insufficient such that there may be a problem of dyeing (defecting dyeability) due to non-stretching, and cost increase may occur due to a decrease in productivity. If it is more than 5,000 mpm, the deviation of physical properties may occur due to over-stretching, and elongation may decrease, resulting in a large amount of trimming and insufficient process passability in the subsequent process.

Further, in the present invention, the spinning may be carried out using a general spinneret used in the art, and preferably, it is preferable to perform spinning by using a modified cross-section spinneret(or non-circular spinneret) to reduce the reflected light and improve the deep color and clarity of the flame retardant fiber. In addition, for the modified cross-section spinneret, it is possible to use a modified cross-section spinneret having a shape such as a triangular shape, a star shape or a hollow-type spinneret.

Further, in the manufacturing method of the present invention, within the range that does not impair dyeability, flame retardancy and mechanical properties of the flame retardant fiber of the present invention, when melting the polyester compound during the polymerization reaction of the second step or in the third step, an additive including at least one selected from a metal catalyst, a heat stabilizer, an antifoaming agent, an antioxidant, a lubricant, a light stabilizer, a hydrolysis stabilizer, a release agent, a pigment, an antistatic agent, a conductivity imparting agent, an EMI shielding agent, a magnetization agent, a mineral filler, a crosslinking agent, an antibacterial agent, a processing aid, a metal deactivator, a flame retardant, a fluorine-based anti-drip agent, an anti-friction agent, an anti-wear agent and a coupling agent may be further added.

The flame retardant resin of the present invention prepared using the polyester resin of the present invention described above may have a K/S value of 13 to 19, preferably, 14 to 18, and more preferably, 15 to 18, when the color yield is measured by using a colorimeter based on the CIE 1976 standard.

In addition, when the flame retardant fiber of the present invention has a mono-fineness of 1.2 de to 2.2 de, the after-flame time may be less than 1 second, preferably, 0.8 seconds or less, and more preferably, 0.2 seconds to 0.7 seconds, when measured according to the measurement method of flame retardancy (KS K 0585: 2008).

In addition, when the mono-fineness is 1.2 de to 2.2 de, the flame retardant fiber of the present invention may have a strength is 3.4 to 4.5 g/de, preferably, 3.7 to 4.3 g/de, and more preferably 3.8 to 4.3 g/de.

In addition, when the mono-fineness is 1.2 de to 2.2 de, the flame retardant fiber of the present invention may have an elongation of 25 to 40%, preferably, 28 to 38%, and more preferably, 30 to 36%.

In addition, the flame retardant fiber of the present invention may have a limiting oxygen index (LOI) of 30 to 40%, preferably 32 to 39%, and more preferably 33 to 38, when measured according to KS-M ISO No. 4589-1.

Hereinafter, the present invention will be described in more detail through Examples. However, the following Examples are not intended to limit the scope of the present invention, but these should be construed to help the understanding of the present invention.

### [Example]

### Example 1: Preparation of polyester compound (resin) and flame retardant fiber

### (1) Preparation of oligomer

After mixing terephthalic acid and ethylene glycol (diol-type base) at a molar ratio of 1: 1.40, an esterification reaction was performed at 240°C for 2 hours to prepare an oligomer having a weight average molecular weight of about 90. When performing the esterification reaction, it was carried out while dehydrating water generated to increase the reactivity.

### (2) Preparation of polyester compound (resin)

A polyester compound was prepared by polymerizing 98.7 mol% of the oligomer and 1.3 mol% of metal sulfonate represented by the Chemical Formula 1-1 below. In this case, the polymerization reaction was carried out under conditions of 278°C to 280°C and 1.5 torr or less.

In addition, solid-state polymerization was additionally performed to remove unreacted metal sulfonate and oligomers.

In addition, a polyester resin was prepared by mixing a phosphorus compound including a polymer represented by the Chemical Formula 2-1 below with the polyester compound dried by melt polymer mixing. In this case, the phosphorus compound was introduced and mixed such that the P content in the polyester resin (flame retardant fiber) was 6,300 ppm.

The prepared polyester resin had an intrinsic viscosity (IV) of 0.670 dL/g, as measured by an Ubbelohde viscometer, and a melting temperature of 240°C.

Next, the polyester resin was dried at 110°C to 115°C for 4 hours.

Next, the dried polyester resin was melted at 270°C and then spun at a spinning speed of 2,500 mpm through a circular spinneret at 280°C and 1.2 to 1.3 torr to prepare a flame retardant fiber having a fineness of 1.5 denier.

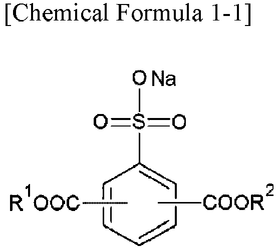

In Chemical Formula 1-1 above, R¹ and R² are methyl groups.

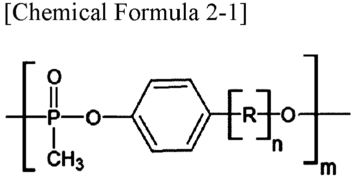

In Chemical Formula 2 above, R is a linear alkylene group having 3 carbon atoms, n is an integer of 10, and m is an integer of 40.

### Example 2

A polyester resin was prepared in the same manner as in Example 1, but the compound represented by Chemical Formula 2-1 above was introduced so as to be 5,500 ppm based on the P content in the total weight of the mixture to prepare a polyester resin, and then by using the same, a flame retardant fiber having a fineness of 1.5 denier was prepared (refer to Table 1 below).

### Example 3

A polyester resin was prepared in the same manner as in Example 1, but the compound represented by Chemical Formula 2-1 above was introduced so as to be 6,800 ppm based on the P content in the total weight of the mixture to prepare a polyester resin, and then by using the same, a flame retardant fiber having a fineness of 1.5 denier was prepared.

### Example 4

A polyester resin was prepared in the same manner as in Example 1, but the compound represented by Chemical Formula 1-1 above was introduced so as to be 2.0 mol% in the polymerized polyester compound to prepare a polyester resin, and then by using the same, a flame retardant fiber having a fineness of 1.5 denier was prepared.

### Example 5

A polyester resin was prepared in the same manner as in Example 1, but the compound represented by Chemical Formula 1-1 above was introduced so as to be 1.0 mol% in the polymerized polyester compound to prepare a polyester resin, and then by using the same, a flame retardant fiber having a fineness of 1.5 denier was prepared.

### Comparative Example 1

A polyester resin was prepared in the same manner as in Example 1, but a polyester resin was prepared using a compound represented by Chemical Formula 3 below instead of the compound represented by Chemical Formula 2-1 above, and then by using the same, a flame retardant fiber having a fineness of 1.5 denier was prepared.

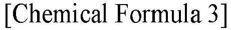

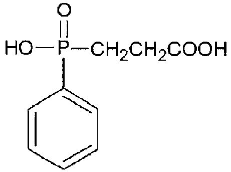

### Comparative Example 2

A polyester resin was prepared in the same manner as in Example 1, but the compound represented by Chemical Formula 2-1 above was introduced so as to be 7,500 ppm based on the P content in the total weight of the mixture to prepare a polyester resin, and then by using the same, a flame retardant fiber having a fineness of 1.5 denier was prepared.

### Comparative Example 3

A polyester resin was prepared in the same manner as in Example 1, but the compound represented by Chemical Formula 2-1 above was introduced so as to be 8,000 ppm based on the P content in the total weight of the mixture to prepare a polyester resin, and then by using the same, a flame retardant fiber having a fineness of 1.5 denier was prepared.

### Comparative Example 4

A polyester resin was prepared in the same manner as in Example 1, but the compound represented by Chemical Formula 1-1 above was introduced so as to be 3.0 mol% in the polymerized polyester compound to prepare a polyester resin, and then by using the same, a flame retardant fiber having a fineness of 1.5 denier was prepared.

### Comparative Example 5

A polyester resin was prepared in the same manner as in Example 1, but the compound represented by Chemical Formula 1-1 above was introduced so as to be 6.0 mol% in the polymerized polyester compound to prepare a polyester resin, and then by using the same, a flame retardant fiber having a fineness of 1.5 denier was prepared.

### Comparative Example 6

A polyester resin was prepared in the same manner as in Example 1, but the compound represented by Chemical Formula 1-1 above was introduced so as to be 0.5 mol% in the polymerized polyester compound to prepare a polyester resin, and then by using the same, a flame retardant fiber having a fineness of 1.5 denier was prepared.

**[Table 1]**

| Classification | Type of flame retardant | P content (ppm) | Content of metal sulfonate (mol%) | Mono-fineness (DE) |
|---|---|---|---|---|
| Example 1 | Chemical Formula 2-1 | 6,300 | 1.3 | 1.5 |
| Example 2 | Chemical Formula 2-1 | 5,500 | 1.3 | 1.5 |
| Example 3 | Chemical Formula 2-1 | 6,800 | 1.3 | 1.5 |
| Example 4 | Chemical Formula 2-1 | 6,300 | 2.0 | 1.5 |
| Example 5 | Chemical Formula 2-1 | 6,300 | 1.0 | 1.5 |
| Comparative Example 1 | Chemical Formula 3 | 6,300 | 1.3 | 1.5 |
| Comparative Example 2 | Chemical Formula 2-1 | 7,000 | 1.3 | 1.5 |
| Comparative Example 3 | Chemical Formula 2-1 | 8,000 | 1.3 | 1.5 |
| Comparative Example 4 | Chemical Formula 2-1 | 6,300 | 3.0 | 1.5 |
| Comparative Example 5 | Chemical Formula 2-1 | 6,300 | 6.0 | 1.5 |
| Comparative Example 6 | Chemical Formula 2-1 | 6,300 | 0.5 | 1.5 |

### Experimental Example 1: Measurement of physical properties of flame retardant fiber

### (1) Measurement of flame retardancy

By using the UL 94-AVH chamber by the KS M 3305 method, the flame retardancy of the polyester fiber was measured, and the results are shown in Table 2 below.

### (2) Measurement of strength and elongation

The strength and elongation of the fiber were measured by applying a speed of 50 cm/m and a gripping distance of 3 cm using an automatic tensile tester (Textechno). For strength and elongation, the strength was defined as the value (g/de) obtained by dividing the applied load by the denier (g/de) when the fiber is stretched until it is cut by applying a constant force to the fiber, and the elongation was defined as the value (%) of the initial length as a percentage with respect to the increased length.

### (3) Measurement of limiting oxygen index

The limiting oxygen index (LOI) was measured in accordance with KS-M ISO No. 4589-1, and the results are shown in Table 2 below.

### (4) After-flame time (S)

The after-flame time was measured according to the measurement method of flame retardancy (KS K 0585: 2008). Herein, when evaluating flame retardancy, after-flame time is the elapsed time between exposing a fire source (fire) to a material for 5 seconds and then removing the fire source to extinguish fire on the material, and if it was within 3 seconds, it passed.

### (5) Measurement of color yield

The color yield was measured according to the CIE 1976 method, and the results are shown in Table 2 below.

**[Table 2]**

| Classification | Flame retardant strength | Strength (g/de) | Elongation (%) | Limiting oxygen index (%) | After-flame time (s) | Color yield (K/S value) |
|---|---|---|---|---|---|---|
| Example 1 | V1 | 4.0 | 33 | 36 | 0.5 | 17 |
| Example 2 | V1 | 4.0 | 32 | 31 | 0.7 | 17 |
| Example 3 | V1 | 3.5 | 28 | 35 | 0.5 | 16 |
| Example 4 | V1 | 3.6 | 30 | 32 | 0.6 | 19 |
| Example 5 | V1 | 4.1 | 34 | 35 | 0.7 | 16 |
| Comparative Example 1 | V1 | 3.2 | 28 | 34 | 0.6 | 16 |
| Comparative Example 2 | V1 | 3.4 | 27 | 33 | 0.4 | 12 |
| Comparative Example 3 | V1 | 2.8 | 20 | 40 | 0.4 | 10 |
| Comparative Example 4 | V1 | 3.0 | 22 | 32 | 1.2 | 18 |
| Comparative Example 5 | V1 | 2.7 | 25 | 31 | 1.5 | 17 |
| Comparative Example 6 | V2 | 4.2 | 31 | 35 | 0.7 | 9 |

When the experimental results of Table 2 are reviewed, it was confirmed that the flame retardant fibers of Examples 1 to 5 had high strength, elongation and limiting oxygen index, as well as excellent flame retardancy. In addition, since the color yield had a K/S value of 16 or more, it can be confirmed that the deep color was excellent. In contrast, in the case of Comparative Example 1 using a phosphorus compound different from the present invention, strength and elongation were lower than those of the Examples.

Further, in the case of Comparative Example 2 in which the phosphorus (P) content in the polyester resin was more than 7,000 ppm, the strength was excellent, but the elongation was low and the color yield was low. In addition, in the case of Comparative Example 3 in which the phosphorus (P) content inside was used at 8,000 ppm, the strength and elongation tended to decrease sharply compared to Comparative Example 2, and the color yield was very poor.

In addition, in the case of Comparative Examples 4 and 5 in which the metal sulfonate content was more than 2.5 mol%, the color yield was excellent, but the mechanical properties and flame retardancy were poor compared to Example 1 and the like.

Further, in the case of Comparative Example 6 in which the metal sulfonate content was less than 1.0 mol%, the mechanical properties and flame retardancy were adequate, but the color yield was very poor.

## Claims

1. A polyester resin for a flame retardant fiber, comprising:
a polyester compound; and
a phosphorus compound comprising a repeating unit represented by Chemical Formula 2 below,
wherein the polyester compound comprises a polymer in which an oligomer obtained by esterification of phthalic acid comprising at least one selected from terephthalic acid and isophthalic acid and an aliphatic diol having 2 to 10 carbon atoms; and metal sulfonate represented by Chemical Formula 1 below are polymerized; 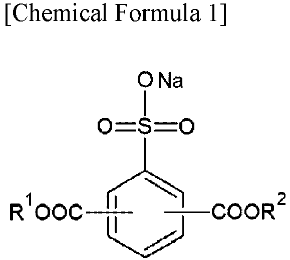
wherein, in Chemical Formula 1 above, R¹ and R² are independently an alkyl group having 1 to 10 carbon atoms, an alkylene group having 2 to 5 carbon atoms, a cycloalkyl group having 5 to 6 carbon atoms, a phenyl group, -CH₂COOH, - CH₂CH₂COOH or -CH₂CH₂CH₂COOH, and 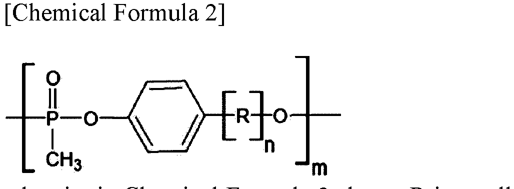
wherein, in Chemical Formula 2 above, R is an alkylene group having 1 to 5 carbon atoms, n is an integer of 1 to 20, and m is an integer of 1 to 80.

2. The polyester resin of claim 1, wherein the polyester compound comprises a polymer obtained by polymerizing 97.5 to 99 mol% of the oligomer and 1.0 to 2.5 mol% of the phosphorus compound.

3. The polyester resin of claim 1, wherein the phosphorus (P) content in the polyester resin is 5,000 to 7,000 ppm.

4. The polyester resin of claim 1, wherein the aliphatic diol comprises at least one selected from ethylene glycol, diethylene glycol, propylene glycol, butylene glycol, trimethyl glycol, tetramethylene glycol, pentamethyl glycol, hexamethylene glycol, heptamethylene glycol, octamethylene glycol, nonamethylene glycol, decamethylene glycol, undecamethylene glycol, dodecamethylene glycol and tridecamethylene glycol

5. The polyester resin of claim 1, wherein the oligomer is obtained by polymerizing phthalic acid and the aliphatic diol at a molar ratio of 1:1.20 to 1.50.

6. The polyester resin of claim 1, wherein the polyester resin has a melting temperature of 210 to 240°C and an intrinsic viscosity (IV) of 0.500 to 0.750 dL/g.

7. A flame retardant fiber with excellent dyeability, comprising the polyester resin of any one selected from claims 1 to 6.

8. The flame retardant fiber of claim 7, wherein when the mono-fineness of the fiber is 1.2 de to 2.2 de (denier), the after-flame time is less than 1 second, when measured according to the measurement method of flame retardancy (KS K 0585: 2008), and when measured according to KSM ISO 4589-2, the limiting oxygen index (LOI) is 30% to 40%, the strength is 3.4 g/de to 4.5 g/de, and the elongation is 25% to 40%.

9. A flame retardant yarn, comprising the flame retardant fiber of claim 7.

10. A method for manufacturing a flame retardant fiber with excellent dyeability, comprising:
a first step of preparing an oligomer by performing an esterification reaction with phthalic acid comprising at least one selected from terephthalic acid and isophthalic acid and an aliphatic diol having 2 to 10 carbon atoms;
a second step of preparing a polyester compound by polymerizing the oligomer and metal sulfonate represented by Chemical Formula 1 above; and
a third step of melting and spinning the polyester compound,
wherein upon melting, spinning is performed after a phosphorus compound comprising a repeating unit represented by Chemical Formula 2 above is mixed with the polyester compound by chip mixing or melt polymer mixing;
